# EUROPEAN PATENT APPLICATION

(11) **EP 3 279 857 A1**
(43) Date of publication of application: **07.02.2018**
(21) Application number: 15887658.1
(22) Date of filing: 03.04.2015
(51) Int. Cl.: G06Q 50/10

(54) **COMMENT ANALYSIS SYSTEM, COMMENT ANALYSIS METHOD, AND PROGRAM FOR COMMENT ANALYSIS**

(71) Applicant: QON Inc., Tokyo 108-0073 (JP)
(72) Inventor: TAKEDA, Takashi, Tokyo 105-0001 (JP)
(74) Representative: Weickmann & Weickmann PartmbB
(86) International application number: PCT/JP2015/060549
(87) International publication number: WO 2016/157512

(57) **Abstract**

A comment analysis system includes: a behavior information acquisition unit 103 configured to acquire behavior information indicative of the behavior of a user on a community site; a user identification unit 104 configured to identify, from among users on the community site, a user whose behavior indicated in the behavior information is changed; and a comment information extraction unit 105 configured to extract, from a database 100, comment information to which the user whose behavior is changed responds as a respondent to the comment, wherein comment information from another user to which the user whose behavior is actually changed responds on the community site is extracted. This can lead to extracting a wide variety of comment information having an influence on the behavior of each user due to some factors in addition to comment information high in commenter's emotional value, and utilizing the comment information in marketing.

## Description

### Technical Field

The present invention relates to a comment analysis system, a comment analysis method, and a program for comment analysis, and particularly to a system configured to analyze such a comment as to influence the intention and action of a visitor.

### Background Art

Recently, the number of users of social media has totaled over five million people, and each of customer service companies has accelerated the trial-and-error approach of utilizing the social media in marketing. For example, sites capable of freely writing comments (such as opinions, impressions, and free reviews) online on various topics and sharing the comments with others (for example, sites for blogs, message boards, free reviews, and the like) are considered to be utilized in marketing.

In other words, it is pointed out that a comment by another person on a certain commercial product strongly influences the purchase behavior of each visitor, and such a comment is expected as a new medium for advertising. Especially, a comment including an affective element of a commenter has more influence on the visitor than an objective comment without any affective element, and it is known that the former comment influences the visitor more strongly.

Conventionally, to motivate the action of a user who browses comments in consideration of the above tendency, there is proposed a system using the emotion of a commenter as an index of display control of each comment (for example, see Patent Literature 1). In this system described in Patent Literature 1, the psychological state of each commenter is determined on predetermined conditions based on biological information, voice data, image data, and the like of the commenter to calculate an emotional value. Then, the comments are determined to be displayed in descending order of calculated emotional value.

### Citation List

### Patent Literature

Patent Literature 1: Japanese Patent Application Laid-Open No. 2012-113589

### Summary of Invention

### Technical Problem

In the system described in Patent Literature 1 mentioned above, only the commenter's emotion is so regarded that comments larger in emotional value will be displayed preferentially as strongly influencing the action of each visitor. However, the element that influences the action of the visitor is not limited to the emotion of the commenter. In other words, preferentially displaying the comments having large emotional values from commenters does not lead to increasing the advertising effect. Thus, there is a problem that the technique described in Patent Literature 1 cannot widely take comments influencing the action of visitors and utilizing the comments in marketing.

The present invention has been made to solve such a problem, and it is an object thereof to be able to take comments influencing the action of visitors (action, voice, statement of an intention, and the like) more widely.

### Solution to Problem

In order to solve the above problem, according to the present invention, comment information entered by a user on a community site is stored in a database in association with commenter information, and response information entered by another user to the comment information is stored in the database in association with respondent information and the comment information to which the respondent responds. At the same time, behavior information indicative of the behavior of each user on the community site is acquired. Then, a user whose behavior indicated in the behavior information is changed is identified from among users on the community site, and comment information to which the user responds as the respondent to the comment is extracted.

According to the present invention thus configured, comment information from another user to which the user whose behavior is actually changed responds on the community site is extracted. The fact that the user responds to comment information can mean that the user is influenced from the comment information in some way. Further, since the behavior of the user is actually changed, such a causal relation that the behavior of the user is changed under the influence of the comment information can be inferred.

Thus, according to the present invention, a wide variety of comment information potentially influencing the behavior of each user due to some factors can be extracted in addition to comment information high in commenter's emotional value, and utilized in marketing. Further, when the extracted comment information is analyzed, various factors potentially influencing the behavior of the user can be widely considered and comment information including such factors can be utilized in marketing.

### Brief Description of Drawings

FIG. 1 is a diagram illustrating a configuration example of a comment analysis system according to one embodiment of the present invention.
FIG. 2 is a block diagram illustrating a functional configuration example of a server according to a first embodiment.
FIG. 3 is a table illustrating an example of information stored in a database by a comment information registration unit according to the embodiment.
FIG. 4 is a table illustrating an example of information stored in the database by a response information registration unit according to the embodiment.
FIG. 5 is a diagram for describing the outline of processing performed by a user identification unit and a comment information extraction unit according to the first embodiment.
FIG. 6 is a flowchart illustrating an operation example of the server according to the first embodiment.
FIG. 7 is a block diagram illustrating a functional configuration example of a server according to a second embodiment.
FIG. 8 is a block diagram illustrating a functional configuration example of a server according to a third embodiment.
FIG. 9 contains diagrams for describing the outline of processing performed by a pros and cons proportion calculating unit of the third embodiment.

### Description of Embodiments

### (First Embodiment)

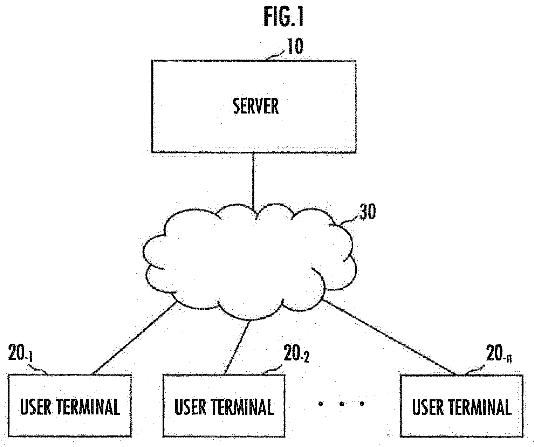

A first embodiment of the present invention will be described below with reference to the accompanying drawings. FIG. 1 is a diagram illustrating a configuration example of a comment analysis system according to the first embodiment.

As illustrated in FIG. 1, the comment analysis system according to the first embodiment includes a server 10 and multiple user terminals 20₋₁ to 20₋ₙ (hereinafter simply referred to as the user terminals 20 unless a specific user terminal is indicated). The server 10 and the multiple user terminals 20 are connected through the Internet 30 to enable the multiple user terminals 20 to exchange comment information via a community site provided by the server 10.

In the first embodiment, a case is considered where the comment information is utilized in the marketing of a commercial product or service X (hereinafter simply referred to as the commercial product X). Therefore, pieces of comment information posted from multiple users who participate in online talks on the community site about the commercial product X as a topic are analyzed to extract comment information potentially influencing the behavior of each user (the action to purchase the commercial product X).

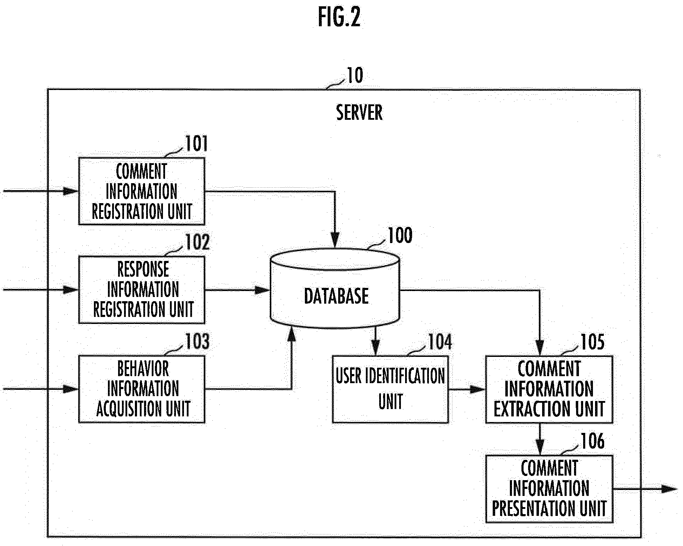

FIG. 2 is a block diagram illustrating a functional configuration example of the server 10 according to the first embodiment. As illustrated in FIG. 2, the server 10 according to the first embodiment includes, as the functional configuration, a database 100, a comment information registration unit 101, a response information registration unit 102, a behavior information acquisition unit 103, a user identification unit 104, a comment information extraction unit 105 and a comment information presentation unit 106.

Each of the above functional blocks 101 to 106 can be implemented by hardware, a DSP (Digital Signal Processor), or software. For example, when being implemented by software, each of the above functional blocks 101 to 106 is practically configured to include a CPU, a RAM, a ROM, and the like of a computer and implemented by executing a program for comment analysis stored in a recording medium such as the RAM or ROM, a hard disk, or a semiconductor memory.

The comment information registration unit 101 accepts comment information entered by a user on the community site and stores the comment information in the database 100 in association with commenter information indicative of a commenter. In other words, the comment information registration unit 101 accepts the comment information and the commenter information for identifying the commenter as the sender of the comment information from each of the multiple user terminals 20 through the Internet 30, and stores the comment information and the commenter information in the database 100 in association with each other.

Here, for example, a user ID given to a user who is participating in the community can be used as the commenter information. A user name or nickname used in the community may also be used as the commenter information. As still another example, information capable of uniquely identifying a user terminal 20 concerned (for example, an IP address, a MAC address, or the like) may be used as the commenter information.

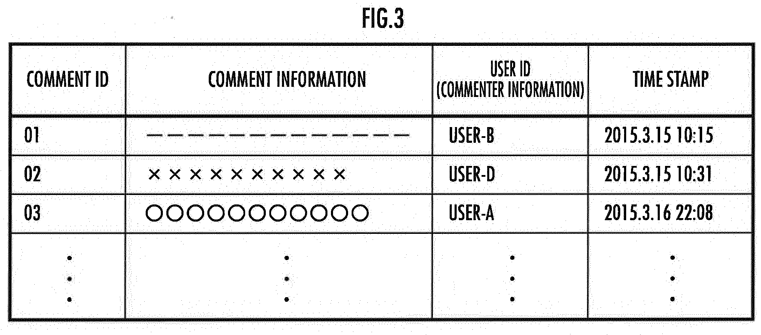

FIG. 3 is a table illustrating an example of information stored in the database 100 by the comment information registration unit 101. In FIG. 3, an example is illustrated, where comment information entered by each user on the community site, a comment ID for uniquely identifying each piece of comment information, a user ID as the commenter information indicating a commenter, and a time stamp representing the date and time of entering the comment information are stored in association with one another. The comment ID and the time stamp are issued, for example, each time the comment information registration unit 101 accepts the comment information.

The response information registration unit 102 accepts response information entered by another user to the comment information on the community site, and stores the response information in the database 100 together with respondent information indicative of a respondent to the comment in association with the comment information to which the respondent responds. In the first embodiment, the response information registration unit 102 accepts intention information (for example, operation information on a so-called "like button" or an "applause button") to intend to support comment information as response information to the comment information.

Specifically, the response information registration unit 102 accepts, from the multiple user terminals 20 through the Internet 30, response information (hereinafter restated as "applause information" to give a description), respondent information for identifying a respondent to each comment as a sender of the applause information, and a comment ID for identifying comment information to which applause is given, and stores these pieces of information in the database 100 in association with one another.

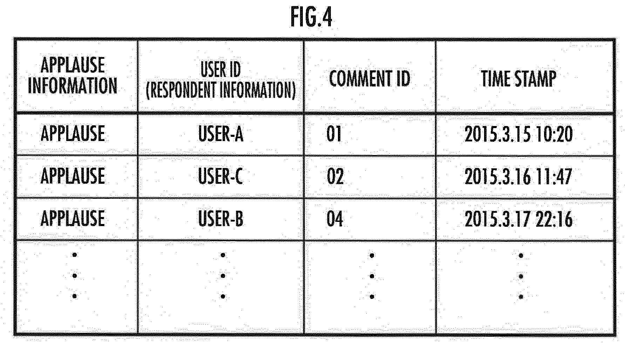

FIG. 4 is a table illustrating an example of information stored in the database 100 by the response information registration unit 102. In FIG. 4, an example is illustrated, where applause information entered by each user on the community site, a user ID as respondent information indicative of a respondent to each comment, a comment ID indicating to which comment information the respondent has responded, and a time stamp representing the date and time of entry of the applause information are stored in association with one another. In this example, the applause information and the comment information are associated via the comment ID.

The behavior information acquisition unit 103 acquires behavior information indicative of the behavior of each user on the community site. In the first embodiment, the behavior information acquisition unit 103 acquires, as behavior information, purchase information indicating that a user has purchased the commercial product X covered as a specific topic on the community site. The purchase information is information indicating who has purchased what and when. In the embodiment, it is assumed that the purchase information acquired by the behavior information acquisition unit 103 is also registered in the database 100.

The purchase information is acquired in a way different from exchanging the comment information and the applause information on the community site. For example, a purchase information entry button is provided on a screen used by the community site to display a purchase information entry screen in response to a user's operation to the purchase information entry button to urge the user to enter the purchased commercial product and the purchase date. The behavior information acquisition unit 103 acquires the purchased commercial product and the purchase date, entered via this purchase information entry screen, as purchase information through the Internet 30 together with the user ID. Note that such a rule that purchase information is entered only when the user purchases the commercial product X can be made to eliminate the need to enter the purchased commercial product.

As another example, purchase information registered on an EC site different from the community site can also be acquired. When a user has purchased the commercial product X on an EC site, purchase information indicating who has purchased what and when is registered on the EC site. The behavior information acquisition unit 103 acquires the purchase information registered on this EC site. In this case, there is a need to connect the purchase information acquired by the behavior information acquisition unit 103 to comment information and applause information registered in the database 100. As a key to the connection, a user ID can be used.

For example, suppose that the community site is related to a company community sponsored by a company selling the commercial product X. In this case, a user ID given to each user participating in the company community can be shared with a user ID used when the user purchases a commercial product on the EC site for the company to sell the commercial product X. Using this shared user ID, the purchase information acquired by the behavior information acquisition unit 103 can be connected to the comment information and the applause information registered in the database 100.

Here, the case where the user purchases the commercial product X on the EC site is taken as an example, but the present invention is not limited thereto. For example, even when the user has purchased the commercial product X at a physical retailer, if the user performs user registration for getting services after the purchase, the same processing as the case where the user purchases the commercial product X on the EC site can be applied. In other words, upon the user registration, if the user registers the purchased commercial product and the purchase date and gives the same ID as the user ID on the community site to the registered purchase information, the purchase information (user registration information) acquired by the behavior information acquisition unit 103 can be connected to the comment information and the applause information registered in the database 100.

Among users participating in an online talk on the community site, the user identification unit 104 identifies a user the behavior of which is determined to be changed from the behavior information acquired by the behavior information acquisition unit 103. In the first embodiment, the user identification unit 104 identifies a user indicated in the purchase information acquired by the behavior information acquisition unit 103 as having purchased the commercial product X. Specifically, the user identification unit 104 identifies a user on the community site to which the same user ID as the user ID included in the purchase information is given.

When the user who has purchased the commercial product X is identified by the user identification unit 104, the comment information extraction unit 105 refers to the database 100 to extract comment information indicating that the user who has purchased the commercial product X makes a response as a respondent to each comment. Specifically, the comment information extraction unit 105 first refers to the information in FIG. 4 registered in the database 100 to acquire a comment ID of comment information, to which the user gives applause, based on the user ID of the user identified by the user identification unit 104. Next, the comment information extraction unit 105 refers to the information in FIG. 3 registered in the database 100 to acquire comment information associated with the comment ID acquired as mentioned above.

Here, among pieces of comment information to which the user who have purchased the commercial product X gives applause, it is preferred that the comment information extraction unit 105 should extract comment information registered before the purchase date and time indicated in the purchase information acquired by the behavior information acquisition unit 103. Alternatively, comment information to which applause is given before the purchase date and time indicated in the purchase information acquired by the behavior information acquisition unit 103 may be extracted.

The comment information presentation unit 106 presents the comment information extracted by the comment information extraction unit 105. As the presentation method, various methods can be applied. For example, a method of displaying, on a display (not illustrated) provided on the server 10, the comment information extracted by the comment information extraction unit 105 is taken as an example.

Alternatively, the comment information extracted by the comment information extraction unit 105 may be printed using a printer (not illustrated) connected to the server 10. As still another example, the comment information extracted by the comment information extraction unit 105 may be sent through the Internet 30 to company terminals (not illustrated) to be used by users of companies desired to use the analysis results of the comment information.

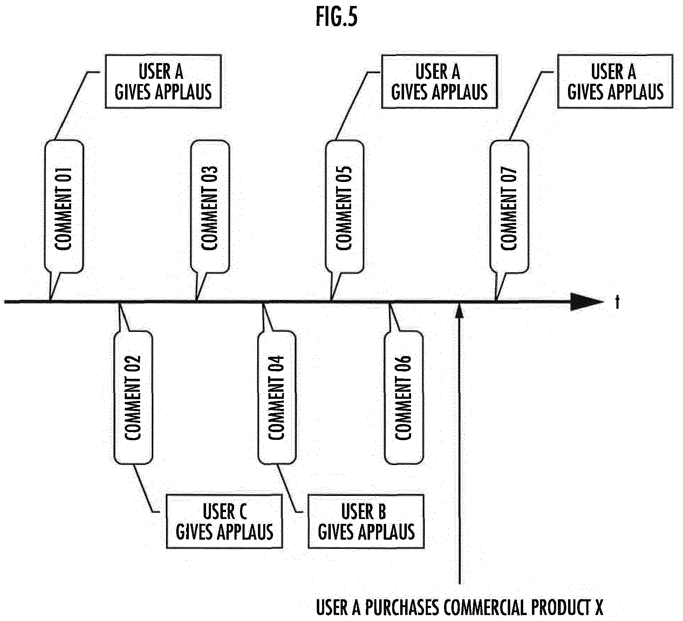

FIG. 5 is a diagram for describing the outline of processing performed by the user identification unit 104 and the comment information extraction unit 105. In FIG. 5, the abscissa represents time, and this diagram illustrates a state where comment information 01 to comment information 07 posted by multiple users are registered in the database 100 in order by the comment information registration unit 101.

In the example of FIG. 5, such a state that user A gives applause to comment information 01, 05, 07, user C gives applause to comment information 02, and user B gives applause to comment information 04 is also illustrated. Further, in the example of FIG. 5, such a state that user A purchases the commercial product X at timing between the date and time of registration of comment information 06 and the date and time of registration of comment information 07 is illustrated. The purchase information acquired by the behavior information acquisition unit 103 indicates that user A purchases the commercial product X at this timing.

In the state of FIG. 5, the user identification unit 104 identifies user A from among multiple users who participate in online talks as having purchased the commercial product X indicated in the purchase information acquired by the behavior information acquisition unit 103. Then, among the comment information applauded by user A who has purchased the commercial product X, the comment information extraction unit 105 extracts comment information 01, 05 registered before the date and time of purchase indicated in the purchase information acquired by the behavior information acquisition unit 103.

The comment information presentation unit 106 presents comment information 01, 05 extracted by the comment information extraction unit 105. A user who received this presentation can utilize comment information 01, 05 in marketing. For example, it is considered that a keyword commonly included in comment information 01, 05 is extracted and used in an advertising copy. Alternatively, text mining of comment information 01, 05 can be carried out to conduct trend analysis in order to estimate a potential factor to be linked to the purchase of the commercial product X.

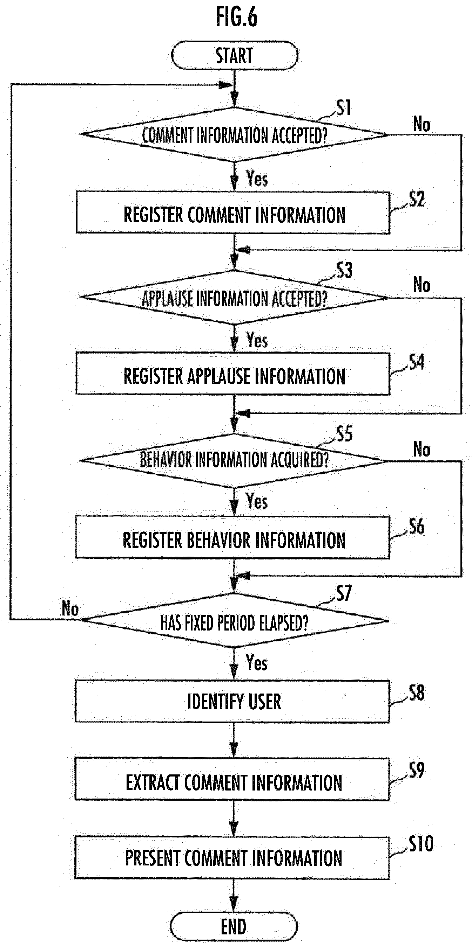

FIG. 6 is a flowchart illustrating an operation example of the server 10 configured as above according to the first embodiment. Here, it is assumed that an online talk session related to the commercial product X is conducted on the community site every fixed period. In this example, processing of the flowchart illustrated in FIG. 6 is started at the start of counting during the fixed period after the community site is set up.

First, the comment information registration unit 101 determines whether comment information entered by each user on the community site is accepted (step S1). When comment information is accepted, the comment information registration unit 101 stores, in the database 100, the comment information in association with a comment ID, a user ID representing a commenter, and a time stamp representing the date and time of entry of the comment (step S2).

Next, the response information registration unit 102 determines whether applause information entered by each user in response to comment information on the community site is accepted (step S3). When applause information is accepted, the response information registration unit 102 stores, in the database 100, the applause information in association with a user ID representing a respondent to the comment, a comment ID representing comment information to which the respondent responds, and a time stamp representing the date and time of entry of applause (step S4).

Further, the behavior information acquisition unit 103 determines whether purchase information indicating that a user has purchased the commercial product X covered as a specific topic on the community site is acquired (step S5). When purchase information is acquired, the behavior information acquisition unit 103 stores the purchase information in the database 100 (step S6).

After that, the user identification unit 104 determines whether the fixed period has elapsed (step S7). When the fixed period has not elapsed yet, the processing returns to step S 1. On the other hand, when the fixed period has elapsed, the user identification unit 104 identifies a user from among users who are participating in the online talk session on the community site as having purchased the commercial product X indicated in the purchase information acquired by the behavior information acquisition unit 103 (step S8). Here, if two or more users have purchased the commercial product X, the user identification unit 104 will identify the two or more users.

Next, from among pieces of comment information to which the user identified by the user identification unit 104 gives applause, the comment information extraction unit 105 extracts comment information registered before the date and time of purchase indicated in the purchase information (step S9). Further, the comment information presentation unit 106 presents the comment information extracted by the comment information extraction unit 105 (step S10). Then, the processing of the flowchart illustrated in FIG. 6 is ended.

As described in detail above, according to the first embodiment, comment information of another user, to which a user having actually purchased the commercial product X covered as a topic on the community site gives applause, can be extracted. The fact that the user gives applause to the comment information can mean that the user is influenced from the comment information in some way. Further, since the user has actually purchased the commercial product X, such a causal relation that the user has purchased the commercial product X under the influence of the comment information to which the user gave applause can be inferred.

Thus, according to the first embodiment, not only comment information high in commenter's emotional value but also comment information potentially having an influence on the purchase behavior of the user due to some factors can be widely extracted and utilized in marketing. Further, analyzing the extracted comment information can lead to widely considering various factors potentially influencing the purchase of the user and utilizing comment information including these factors in marketing.

### (Second Embodiment)

Next, a second embodiment of the present invention will be described with reference to the accompanying drawings. The configuration of a comment analysis system according to the second embodiment is the same as that in FIG. 1.

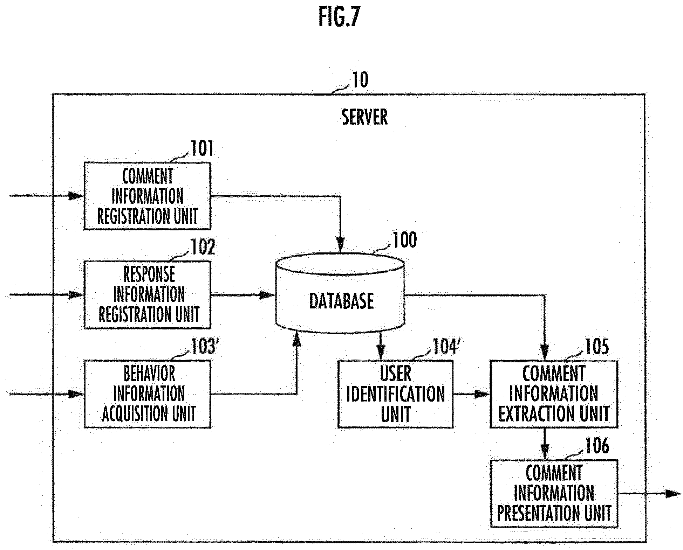

FIG. 7 is a block diagram illustrating a functional configuration example of a server 10 according to the second embodiment. Note in FIG. 7 that the same reference numerals as those in FIG. 2 have the same functions to omit redundant description here.

As illustrated in FIG. 7, the server 10 according to the second embodiment includes a behavior information acquisition unit 103' and a user identification unit 104' instead of the behavior information acquisition unit 103 and the user identification unit 104 illustrated in FIG. 2.

The behavior information acquisition unit 103' acquires, as behavior information, the content of answers of online talk participants as to the pros and cons of a specific topic before and after each online talk session is conducted on the specific topic every fixed period on the community site. For example, when the online talk session for the commercial product X as a topic like in the first embodiment is conducted on the community site, a questionnaire about the pros and cons of the commercial product X (as to whether to purchase the commercial product X) is done before the start and after the end of the online talk session. The behavior information acquisition unit 103' acquires, as behavior information, the content of answers of the online talk participants as to the pros and cons of the commercial product X.

For example, an answer button is provided on the screen used by the community site to display a questionnaire answer screen with a user's operation to the answer button so as to urge the user to enter the pros and cons of the commercial product X. The behavior information acquisition unit 103' acquires, through the Internet 30, the answer content entered through this questionnaire answer screen as behavior information representing a statement of the user's intention.

Based on the behavior information acquired by the behavior information acquisition unit 103', the user identification unit 104' identifies a user whose answer content is changed. For example, the user identification unit 104' identifies a user who answers that the user will purchase the commercial product X after the end of the online talk session though the user answers that the user will not purchase the commercial product X before the start of the online talk session. The comment information extraction unit 105 extracts, from the database 100, comment information to which the user identified by the user identification unit 104', that is, the user whose answer content about the pros and cons of the commercial product X is changed for the better, gave applause.

According to the second embodiment thus configured, comment information potentially having an influence on the purchase of the commercial product X can be extracted and utilized in marketing even though there is no past record that any user on the community site has actually purchased the commercial product X.

Here, although the description is made by taking, as an example, the case where the online talk session for the commercial product X as a topic is conducted on the community site, the topic covered is not limited to the topic on the specific commercial product X. This is because the purchase information on the specific commercial product X is not acquired as behavior information in the second embodiment. For example, as another example of a specific topic, it is possible to cover a specific company image. In this case, it is possible to identify a user whose company image is changed for the better before and after the online talk session is conducted, and extract, from the database 100, comment information to which the user gives applause.

### (Third Embodiment)

Next, a third embodiment of the present invention will be described with reference to the accompanying drawings. A comment analysis system according to the third embodiment is the same as that of FIG. 1.

In the third embodiment, an online talk session about a specific topic is also conducted on the community site every fixed period, and a questionnaire about the pros and cons of the topic is done before the start and after the end of the online talk session like in the second embodiment. Then, a user whose answer content is changed is identified, and comment information to which the identified user gives applause is extracted from the database 100. However, the method of identifying the user whose answer content is changed is different from that in the second embodiment.

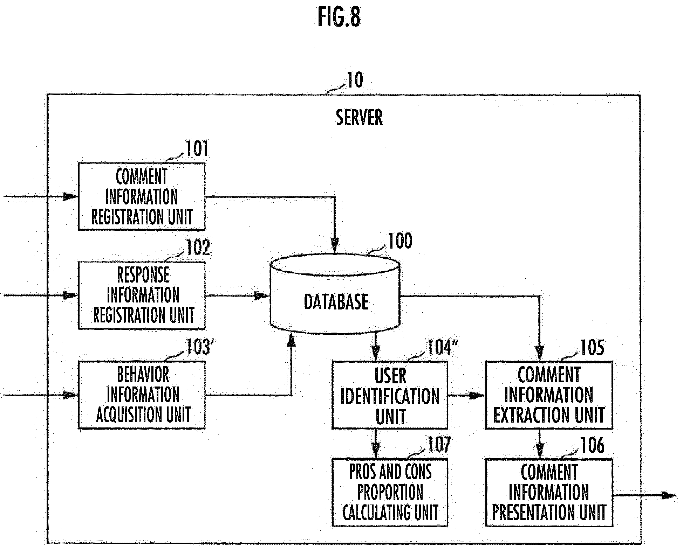

FIG. 8 is a block diagram illustrating a functional configuration example of a server 10 according to the third embodiment. Note in FIG. 8 that the same reference numerals as those in FIG. 7 have the same functions to omit redundant description here.

As illustrated in FIG. 8, the server 10 according to the third embodiment further includes a pros and cons proportion calculating unit 107. Further, the server 10 according to the third embodiment includes a user identification unit 104" instead of the user identification unit 104' illustrated in FIG. 7.

The pros and cons proportion calculating unit 107 groups online talk participants on the community site according to a predetermined attribute, and calculates the pros and cons proportion for each group before the start and after the end of the online talk session, respectively, based on behavior information (answer content related to the pros and cons of the specific topic) acquired by the behavior information acquisition unit 103'.

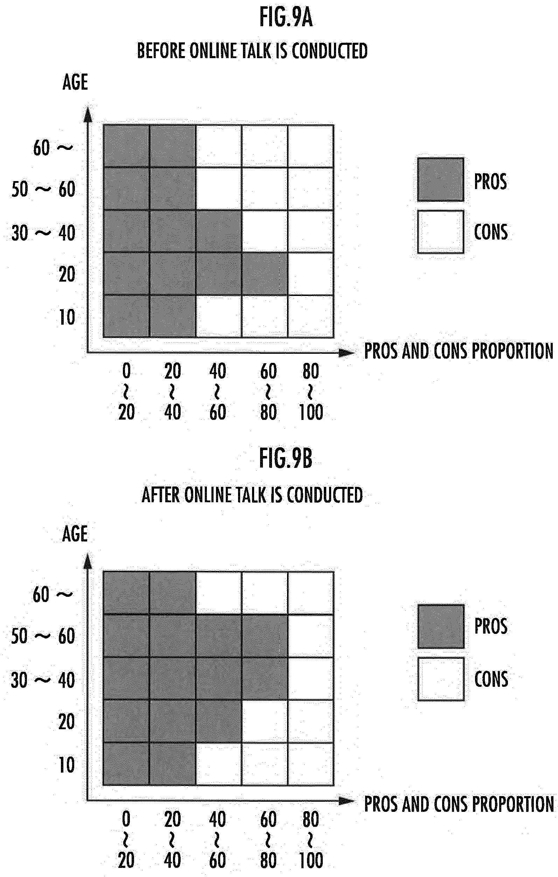

FIG. 9 contains diagrams for describing the outline of processing performed by the pros and cons proportion calculating unit 107. FIG. 9 illustrates an example of using age as the predetermined attribute. In other words, a state of dividing the online talk participants on the community site into five groups according to age is illustrated. Here, as an example, the online talk participants are divided into five groups like 10s, 20s, 30s to 40s, 50s to 60s, and more than 60s.

Based on the content of answers to the questionnaire acquired by the behavior information acquisition unit 103' before and after each online talk session, the pros and cons proportion calculating unit 107 calculates the pros and cons proportion of the specific topic for each of the five groups. In the example of FIG. 9, a state of dividing the calculated pros and cons proportions into five stages is illustrated. In other words, five stages of proportions, 0% to 20% of pros, 20% to 40% of pros, 40 to 60% of pros, 60 to 80% of pros, and 80 to 100% of pros, are illustrated.

FIG. 9A illustrates the pros and cons proportion calculated for each group by the pros and cons proportion calculating unit 107 based on the content of answers to the questionnaire before the start of the online talk session. FIG. 9B illustrates the pros and cons proportion calculated for each group by the pros and cons proportion calculating unit 107 based on the content of answers to the questionnaire after the end of the online talk session. In the example of FIG. 9, the pros and cons proportions vary before and after the online talk session is conducted.

The user identification unit 104" identifies a group whose proportion calculated by the pros and cons proportion calculating unit 107 is changed to a predetermined value or more before and after the online talk session is conducted, and identifies a user whose answer content is changed among users belonging to the identified group. For example, in the example of FIG. 9, the user identification unit 104" identifies a group whose pros proportion increases up to two stages or more before and after the online talk session is conducted. In the example of FIG. 9, this corresponds to the group of 50s to 60s. Further, the user identification unit 104" identifies a user whose answer content is actually changed among users belonging to the group of 50s to 60s. Here, a user whose answer content is changed from the cons to the pros is identified.

The comment information extraction unit 105 extracts, from the database 100, comment information to which the user identified by the user identification unit 104", that is, the user who belongs to the group whose pros and cons proportion of the specific topic becomes a predetermined value or more before and after the online talk session is conducted and whose answer content related to the pros and cons of the specific topic is changed for the better, gave applause.

According to the third embodiment thus configured, comment information potentially having an influence on the behavior of users having a specific attribute can be extracted and utilized in marketing. Thus, effective comment information analysis can be performed on users having the specific attribute.

Further, the third embodiment can be put to practical use as follows: When there are attribute-based statistical data on the pros and cons of the specific topic, online talk participants are so gathered that the distribution of the pros and cons proportion will be the same as the distribution of the pros and cons proportion for each attribute indicated by the statistical data. In other words, online talk participants are so gathered that the distribution of the pros and cons proportion before the start of the online talk session illustrated in FIG. 9A will be the same as the distribution of the statistical data. This is an image of making a miniature version of the distribution of a predetermined number of people while keeping the market distribution.

Then, after the end of the online talk session of the participants thus gathered, the pros and cons proportion calculating unit 107 calculates the pros and cons proportion for each group. Then, the user identification unit 104" identifies a group whose pros proportion increases up to a predetermined value or more before and after the online talk session is conducted, and identifies a user whose answer content is changed for the better among users belonging to the identified group. This can lead to analyzing comment information having an influence on the behavior of users based on a market model close to the reality indicated by the statistical data.

Although the age is used as an attribute example in the third embodiment mentioned above, the used attribute is not limited to the age. Further, although the example of dividing users into five groups according to the attribute is described in the above embodiment, the number of groups is just an illustrative example. Further, in the above embodiment, although the example of dividing the calculated pros and cons proportions into five stages is described, the number of divided stages is not limited to five. Further, the calculated proportion value may be used intact to identify a group with the value being changed to a predetermined value or more.

In the above-mentioned first to third embodiments, the example of using applause information as an example of response information to indicate the intention to support the comment information is described, but the present invention is not limited thereto. Contrary to this, intention information indicating the intension against the comment information may be used as response information. In this case, comment information determined not to be used so much can be analyzed.

The above-mentioned first to third embodiments are all just to illustrate specific examples to carrying out the present invention, and the technical scope of the present invention should not be understood in a limited way. In other words, the present invention can be carried out in various forms without departing form the scope or main features of the present invention.

### Description of Reference Numerals

- 10: server
- 20: user terminal
- 100: database
- 101: comment information registration unit
- 102: response information registration unit
- 103, 103': behavior information acquisition unit
- 104, 104', 104": user identification unit
- 105: comment information extraction unit
- 106: comment information presentation unit
- 107: pros and cons proportion calculating unit

## Claims

1. A comment analysis system comprising:
a comment information registration unit configured to accept comment information entered by a user on a community site and store, in a database, the comment information in association with commenter information indicative of a commenter;
a response information registration unit configured to accept response information entered by another user to the comment information on the community site, and store, in the database, the response information in association with respondent information indicative of a respondent to the comment and the comment information to which the respondent responds;
a behavior information acquisition unit configured to acquire behavior information indicative of behavior of a user on the community site;
a user identification unit configured to identify, from among users on the community site, a user whose behavior indicated in the behavior information acquired by the behavior information acquisition unit is changed; and
a comment information extraction unit configured to refer to the database in the case where the user whose behavior is changed is identified by the user identification unit, and extract the comment information to which the user whose behavior is changed responds as the respondent to the comment.

2. The comment analysis system according to claim 1, wherein
the behavior information acquisition unit acquires, as the behavior information, purchase information indicating that the user has purchased a commercial product or service covered as a specific topic on the community site, and
the user identification unit identifies a user indicated in the behavior information acquired by the behavior information acquisition unit as having purchased the commercial product or service.

3. The comment analysis system according to claim 1, wherein
the behavior information acquisition unit acquires, as the behavior information, the content of answers of online talk participants as to pros and cons of a specific topic before the start and after the end of an online talk session conducted for the topic on the community site, and
based on the behavior information acquired by the behavior information acquisition unit, the user identification unit identifies a user whose answer content is changed.

4. The comment analysis system according to claim 3, further comprising
a pros and cons proportion calculating unit configured to group the online talk participants according to a predetermined attribute and calculate the pros and cons proportion for each group before the start and after the end of the online talk session, respectively, based on the behavior information acquired by the behavior information acquisition unit,
wherein the user identification unit identifies a group whose proportion calculated by the pros and cons proportion calculating unit is changed to a predetermined value or more before and after the online talk session is conducted, and identifies a user whose answer content is changed among users belonging to the identified group.

5. The comment analysis system according to any one of claims 1 to 4, wherein the response information registration unit accepts, as the response information, intention information to indicate an intention of supporting or opposing the comment information.

6. A comment analysis method configured to analyze comment information in a system in which a server and user terminals are connected through a network to control exchange of the comment information on a community site provided by the server, comprising:
causing a comment information registration unit of the server to accept comment information entered by a user on the community site and store, in a database, the comment information in association with commenter information indicative of a commenter;
causing a response information registration unit of the server to accept response information entered by another user to the comment information on the community site, and store, in the database, the response information in association with respondent information indicative of a respondent to the comment and the comment information to which the respondent responds;
causing a behavior information acquisition unit of the server to acquire behavior information indicative of behavior of a user on the community site;
causing a user identification unit of the server to identify, from among users on the community site, a user whose behavior indicated in the behavior information acquired by the behavior information acquisition unit is changed; and
causing a comment information extraction unit of the server to refer to the database in the case where the user whose behavior is changed is identified by the user identification unit, and extract the comment information to which the user whose behavior is changed responds as the respondent to the comment.

7. A program for comment analysis causing a server computer to function as:
a comment information registration unit configured to accept comment information entered by a user on a community site and store, in a database, the comment information in association with commenter information indicative of a commenter;
a response information registration unit configured to accept response information entered by another user to the comment information on the community site, and store, in the database, the response information in association with respondent information indicative of a respondent to the comment and the comment information to which the respondent responds;
a behavior information acquisition unit configured to acquire behavior information indicative of behavior of a user on the community site;
a user identification unit configured to identify, from among users on the community site, a user whose behavior indicated in the behavior information acquired by the behavior information acquisition unit is changed; and
a comment information extraction unit configured to refer to the database in the case where the user whose behavior is changed is identified by the user identification unit and extract the comment information to which the user whose behavior is changed responds as the respondent to the comment.
